(19) Europäisches Patentamt
European Patent Office
Office européen des brevets

(11) **EP 3 919 836 B1**

(12) **FASCICULE DE BREVET EUROPEEN**

(45) Date de publication et mention
de la délivrance du brevet:
**11.12.2024 Bulletin 2024/50**

(21) Numéro de dépôt: **21177623.2**

(22) Date de dépôt: **03.06.2021**

(51) Classification Internationale des Brevets (IPC):
**F25B 15/00** *(2006.01)* **F25B 25/02** *(2006.01)*
**F25B 25/00** *(2006.01)* **F25B 27/00** *(2006.01)*

(52) Classification Coopérative des Brevets (CPC):
**F25B 15/00; F25B 25/005; F25B 25/02;
F25B 27/007;** Y02A 30/27; Y02B 30/62

(54) **SYSTEME THERMIQUE COMPORTANT AU MOINS UN CIRCUIT DE MACHINE À ABSORPTION PRÉSENTANT DES PERFORMANCES AMELIORÉES**

THERMISCHES SYSTEM MIT MINDESTENS EINEM ABSORPTIONSMASCHINENKREISLAUF MIT VERBESSERTER LEISTUNG

THERMAL SYSTEM COMPRISING AT LEAST ONE CIRCUIT OF AN ABSORPTION MACHINE HAVING IMPROVED PERFORMANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2020 FR 2005790**

(43) Date de publication de la demande:
**08.12.2021 Bulletin 2021/49**

(73) Titulaire: **Commissariat à l'Energie Atomique et aux Energies
Alternatives
75015 Paris (FR)**

(72) Inventeurs:
• **PHAN, Hai Trieu
38054 GRENOBLE CEDEX 09 (FR)**
• **MONTZIEUX, Guillaume
38054 GRENOBLE CEDEX 09 (FR)**

(74) Mandataire: **Brevalex
Tour Trinity
1 B Place de la Défense
92400 Courbevoie (FR)**

(56) Documents cités:
EP-A1- 2 669 499         WO-A1-2018/067818
US-A1- 2015 013 373

**Description**

**DOMAINE TECHNIQUE ET ÉTAT DE LA TECHNIQUE ANTÉRIEURE**

La présente invention se rapporte à un système thermique de production de fluides chauds et/ou de fluides froids, en particulier la production d'eau chaude sanitaire ou d'eau chaude pour le chauffage d'une habitation et d'eau froide en vue de rafraîchir une habitation. Le document US 2015/0013373 A montre un système thermique selon l'art antérieur.

Le développement des machines thermiques mettant en oeuvre des cycles thermodynamiques est de plus en plus important, puisqu'elles permettent de réduire les besoins en énergie carbonée pour produire de la chaleur et/ou du froid.

Les machines à absorption permettent de produire simultanément du froid et du chaud.

De telles machines utilisent un fluide frigorigène et un absorbant, et ses changements de phases qui sont obtenus par un apport de chaleur, par exemple fourni par un réseau de chaleur urbain, une source solaire ou une énergie fatale.

Une machine à absorption comporte principalement un générateur ou désorbeur, un condenseur, un détendeur, un évaporateur, un absorbeur et une pompe, Un mélange frigorigène/absorbant est chauffé dans le désorbeur par l'apport de chaleur, le frigorigène se vaporise et se sépare de l'absorbant, puis est envoyé dans un cycle classique condenseur/détendeur/évaporateur. Le frigorigène retourne ensuite à l'absorbeur dans lequel il se mélange à l'absorbant et est ensuite renvoyé dans le désorbeur par la pompe.

L'utilisation d'une machine à absorption requiert une source d'effluent chaud et une source de froid.

La chaleur est récupérée au niveau de l'absorbeur et du condenseur et le froid est récupéré au niveau de l'évaporateur.

Une pompe à chaleur capte par exemple la chaleur extérieure, par exemple du sol ou de l'eau, et restitue à l'intérieur une chaleur augmentée. Elle met en oeuvre un évaporateur, un compresseur, un condenseur et un détendeur. Un fluide frigorigène est évaporé dans l'évaporateur grâce à la chaleur fournie par la source froide. La vapeur ainsi formée est comprimée par le compresseur, ce qui augmente la température de la vapeur. Dans le condenseur, la vapeur est en contact avec un fluide à échauffer, appelé source chaude, auquel il cède une partie de sa chaleur et se condense. Ensuite dans le détendeur la pression du fluide frigorigène s'abaisse ainsi que sa température. Il est renvoyé vers l'évaporateur et entre en contact avec la source froide qui est à une température supérieure au gaz sortant du détendeur.

Il a été envisagée de coupler une machine à absorption et une pompe à chaleur afin, soit d'améliorer la production de froid de la pompe à chaleur, en abaissant la température de condensation, soit d'assurer la continuité de la production de froid de la machine à absorption lorsque l'apport en énergie de la source solaire est insuffisant.

On cherche à optimiser le couplage d'une machine à absorption et d'une pompe à chaleur pour par exemple à la fois produire, avec une efficacité améliorée, du froid et de la chaleur en vue par exemple de produire de l'eau chaude sanitaire et du chauffage.

Plus généralement, on cherche à réaliser un système thermique dans lequel une machine à absorption est couplée à au moins un autre circuit pour en améliorer le fonctionnement.

**EXPOSÉ DE L'INVENTION**

C'est par conséquent un but de la présente invention d'offrir un système thermique comprenant une machine à absorption offrant une efficacité énergétique améliorée.

Le but énoncé ci-dessus est atteint pour un système thermique selon la revendication 1, qui comporte au moins un circuit de machine à absorption et au moins un autre circuit configuré pour collecter la chaleur au niveau du condenseur et de l'absorbeur de la machine à absorption en vue d'une valorisation de la chaleur.

L'autre circuit du système thermique est un circuit de pompe à chaleur et la fonction d'évaporation de la pompe à chaleur est mutualisée au moins à la fois avec la fonction de condensation et la fonction d'absorption de la machine à absorption. Ainsi l'absorbeur et le condenseur servent de source froide pour la pompe à chaleur, qui relève la température de celle-ci et peut produire par exemple de l'eau chaude sanitaire à 70°C à partir d'une eau entre 35°C - 60°C.

La pompe à chaleur comporte au moins deux évaporateurs, l'un mutualisé avec le condenseur et l'autre mutualisé avec l'absorbeur.

Dans un exemple très avantageux, le système comporte un échangeur de chaleur à au moins deux flux formant l'un des évaporateurs de la pompe à chaleur et le condenseur de la machine à absorption, et un échangeur de chaleur à au moins deux flux formant l'un des évaporateurs de la pompe à chaleur et l'absorbeur de la machine à absorption. Le système comporte alors moins de composants et les performances du système sont améliorées.

Dans un exemple de réalisation, la fonction évaporateur de la pompe à chaleur et la fonction évaporateur de la machine à absorption sont mutualisées. Ainsi il est possible de faire fonctionner le système thermique en pompe à chaleur seule en utilisant la source de chaleur connectée à l'évaporateur de la machine à absorption.

Dans un exemple, la première source est une source aérothermique ou géothermique, la deuxième source est un réseau de chaleur urbain, une source de chaleur d'origine solaire ou une énergie fatale et le premier circuit d'utilisation est du chauffage et/ou de l'eau chaude sanitaire.

Dans un autre exemple, la première source peut produire du froid, la deuxième source est un réseau de chaleur urbain, une source de chaleur d'origine solaire ou une énergie fatale et le premier circuit d'utilisation peut être un circuit de chauffage et/ou de production d'eau chaude sanitaire.

Dans un autre exemple, la première source est une source aérothermique ou géothermique ou qui produit du froid, la deuxième source est un réseau de chaleur urbain, une source de chaleur d'origine solaire ou une énergie fatale, le premier circuit d'utilisation est un circuit de chauffage et/ou de production d'eau chaude sanitaire et le deuxième circuit d'utilisation est un circuit de chauffage.

Le système thermique comporte avantageusement une unité de commande configurée pour activer les différents circuits simultanément ou séparément selon des modes programmées.

## BRÈVE DESCRIPTION DES DESSINS

La présente invention sera mieux comprise sur la base de la description qui va suivre et des dessins en annexe sur lesquels:

La figure 1 est une représentation schématique d'un exemple de système thermique selon un premier mode de réalisation.

La figure 2 est une représentation schématique d'un échangeur deux flux.

La figure 3 est une représentation schématique d'une variante du système de figure 1.

La figure 4 est une représentation schématique d'un autre exemple de système thermique selon le premier mode de réalisation dans lequel seule la pompe à chaleur fonctionne, et produit du froid.

La figure 5 une représentation schématique d'un autre exemple de système thermique selon le premier mode de réalisation dans lequel seule la pompe à chaleur fonctionne, et produit du froid et du chauffage et/ou de l'eau chaude sanitaire.

La figure 6 est une représentation schématique d'un autre exemple de système thermique selon le premier mode de réalisation dans lequel seule la pompe à chaleur fonctionne, et produit du chauffage et/ou de l'eau chaude sanitaire.

La figure 7 est une représentation schématique d'un autre exemple de système thermique selon le premier mode de réalisation dans lequel seule la machine à absorption fonctionne.

La figure 8 représente le système thermique de la figure 1 dans un autre mode de fonctionnement.

La figure 9A est représentation schématique d'un autre exemple de système thermique selon un premier mode de réalisation, mettant en oeuvre un troisième circuit.

La figure 9B est une représentation schématique d'un échangeur trois flux,

La figure 10 représente un autre exemple de réalisation d'un système thermique selon un premier mode de réalisation, mettant en oeuvre un troisième circuit, dans lequel seule la machine à absorption fonctionne.

La figure 11 est une représentation schématique d'une variante du système de figure 9A.

La figure 12 est une représentation schématique d'une autre variante du système de la figure 9A.

La figure 13 est une représentation schématique du système de la figure 10, la machine à absorption fonctionnant seule, dans un autre mode de fonctionnement.

La figure 14 est une représentation schématique d'un exemple de système thermique selon un deuxième mode de réalisation.

La figure 15 est une représentation schématique d'un autre exemple de système thermique selon le deuxième mode de réalisation.

La figure 16 est une représentation de mise en oeuvre des différents modes de fonctionnement du système thermique selon l'invention en fonction des saisons.

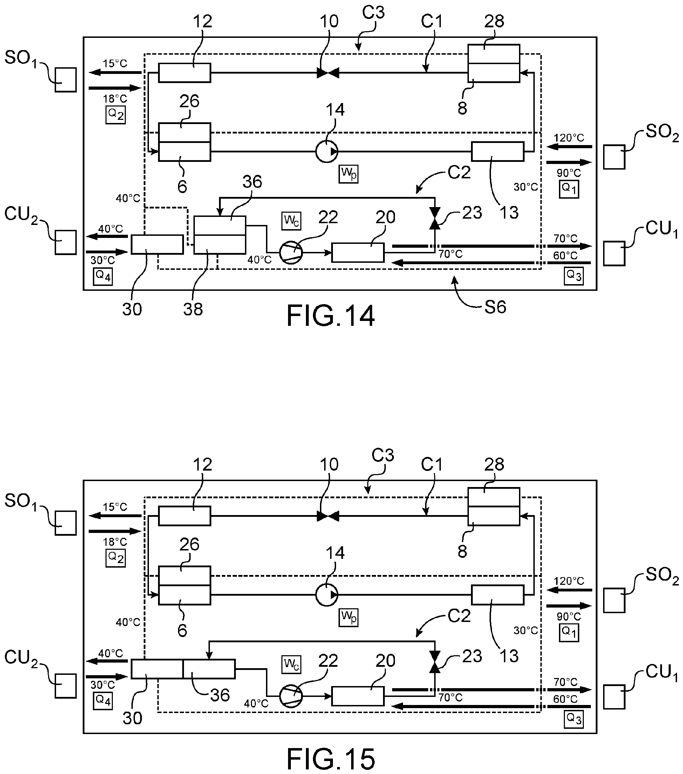

Les exemples selon les figures 14 et 15 ne montrent pas toutes les caractéristiques de la revendication 1.

## EXPOSÉ DÉTAILLÉ DE MODES DE RÉALISATION PARTICULIERS

Dans la description qui va suivre les éléments ayant les mêmes fonctions seront désignés par les mêmes références.

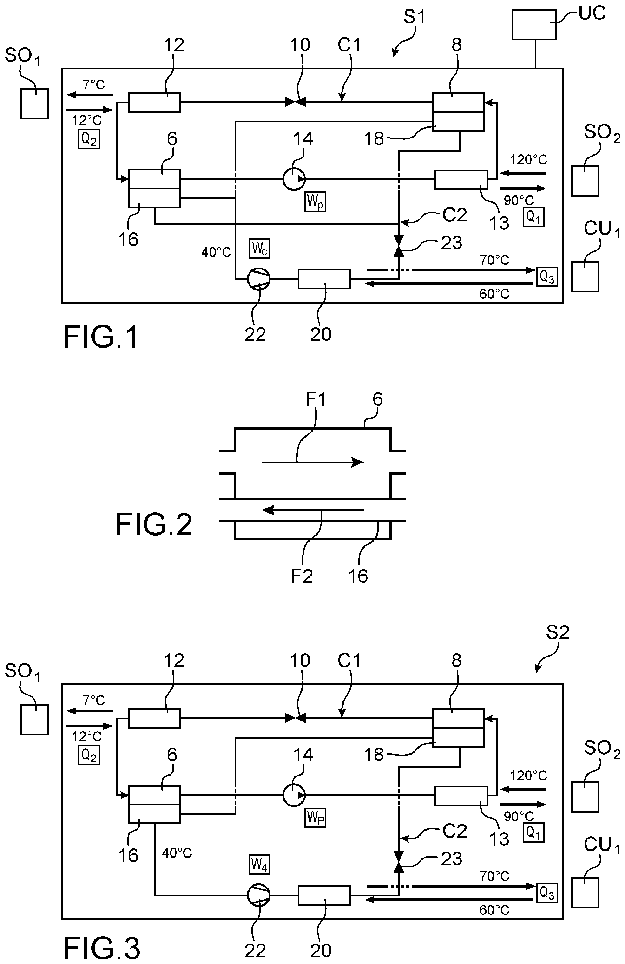

Comme cela sera expliqué en détail ci-dessous le système thermique selon l'invention peut être avantageusement réalisé pour présenter plusieurs modes de réalisation. La figure 1 représente le système thermique comprenant les composants principaux du système thermique et les systèmes représentés sur les figures suivantes comprennent des éléments supplémentaires par rapport au système de la figure 1. A des fins de simplicité, tous les éléments d'un système, lorsqu'ils ne participent pas au mode de fonctionnement illustrés, ne sont pas nécessairement représentés.

Dans la description qui va suivre, les exemples d'application des systèmes sont la production de froid et la production d'eau chaude sanitaire et/ou de chauffage. Le chauffage est obtenu par exemple par circulation d'eau chaude. Il sera compris qu'un autre fluide pourra servir pour transporter la chaleur et que les fluides chauffés ou refroidis peuvent avoir d'autres utilisations.

Sur la figure 1, on peut voir une représentation schématique d'un exemple de système thermique S1 selon un premier mode de réalisation.

Le système thermique 51 comporte un premier circuit C1 comprenant une machine à absorption et un deuxième circuit C2 comprenant une pompe à chaleur couplées l'une à l'autre.

La machine à absorption comporte un absorbeur 6, un condenseur 8, un détendeur 10, un évaporateur 12, un générateur ou désorbeur 13 et une pompe 14. Ces éléments sont connectés fluidiquement en série dans cet ordre.

Le générateur 13 est destiné à être connecté à une source chaude SO2, par exemple un réseau de chaleur urbain, une source solaire ou à une source d'énergie fatale, par exemple à un circuit de refroidissement d'une usine. La source chaude délivre par exemple un fluide entre 80°C - 120°C. La quantité de chaleur échangée au niveau de la source SO1 est désignée Q1, La quantité de chaleur échangée au niveau de la source SO2 est désignée Q2.

L'évaporateur 12 est connecté à une source 501, dans cet exemple il s'agit d'un circuit de climatisation dont on veut refroidir le fluide qui entre par exemple entre [12°C ;30°C] et ressort entre [7°C ;25°C].

La pompe à chaleur comporte des composants 16, 18 formant évaporateur, un condenseur 20, un compresseur 22 et un détendeur 23 entre le condenseur et les composants 16 et 18. Dans l'exemple représenté, le condenseur 20 est connecté en parallèle au composant 16 et au composant 18.

Le condenseur 20 est destiné à chauffer par échange thermique un fluide, par exemple de l'eau chaude sanitaire, à une température par exemple de 70°C. La quantité de chaleur échangée au niveau du condenseur 20 est désignée Q3.

A tire d'exemple, le frigorigène peut être du R134a et l'absorbant du bromure de lithium /$H_2O$ ou $NH_3/H_2O$.

Les composants 16 et 18 de la pompe à chaleur sont couplés thermiquement avec l'absorbeur 6 et le condenseur 8 respectivement de la machine à absorption 2, de sorte que la chaleur dégagée par l'absorbeur et au condenseur soit transmise aux composants 16 et 18 formant évaporateur.

De manière préférée, le composant 16 et l'absorbeur 6 sont intégrés de sorte à former un échangeur thermique à deux flux. Par exemple, un tube formant le composant 16 traverse une enceinte formant l'absorbeur, comme cela est représenté schématiquement sur la figure 2. Ainsi le transfert de chaleur entre le fluide de la machine à absorption et celui de la pompe à chaleur s'effectue avec une grande efficacité et des pertes réduites. En outre le nombre d'éléments du système est réduit.

De manière préférée également, le composant 18 et le condenseur 8 sont intégrés de sorte à former un échangeur thermique à deux flux. Par exemple, un tube formant le composant 18 traverse une enceinte formant le condenseur 8, de manière similaire au composant 16 et l'absorbeur 6.

Il sera compris néanmoins qu'un système thermique dans lequel le composant 16 et l'absorbeur 6 et/ou le composant 18 et le condenseur 8 est ou sont des éléments distincts, dans lesquels le transfert de chaleur est réalisé par des échangeurs intermédiaires ne sort pas du cadre de la présente invention.

Les circuits C1 et C2 sont des circuits fermés. Le circuit C2 de la pompe à chaleur et le circuit C1 de la machine à absorption sont séparés, il n'y a aucun échange de frigorigène entre les deux circuits mais des échanges thermiques entre le condenseur 8 de la machine à absorption et le composant 16 de la pompe à chaleur, et entre l'absorbeur 6 de la machine à absorption et le composant 18 de la pompe à chaleur.

Le fonctionnement du système thermique de la figure 1 va maintenant être décrit. Ce mode est désigné mode 1a.

La source SO2 délivre un flux thermique Q2 au générateur, par exemple à une température de 120°C. Sous l'effet de cet apport de chaleur, le frigorigène F1 s'évapore et se sépare de l'absorbant. Le frigorigène passe dans le condenseur 8, se condense et produit de la chaleur, par exemple à environ 40°C, qui est transféré au frigorigène F2 du composant 18 de la pompe à chaleur par échange thermique. Le frigorigène F2 s'évapore. Le frigorigène F1 travers le détendeur et rejoint l'évaporateur 12 où il s'évapore. Il produit du froid. Le frigorigène F1 est en échange thermique avec un fluide à refroidir, par exemple un fluide d'un circuit de climatisation. L'évaporateur 12 produit du froid, par exemple le fluide entrant à 12°C ressort à 7°C. Le frigorigène F1 rejoint l'adsorbeur 6 où il s'absorbe sur l'absorbant et produit de la chaleur par exemple à environ 40°C, qui est transmise au frigorigène F2 du composant 16 de la pompe à chaleur. Le frigorigène F2 dans le composant 16 s'évapore. Le frigorigène F2 évaporé dans les deux composants 16 et 18 est compressé par le compresseur, sa température augmente, puis il rejoint le condenseur 20 et entre en contact avec une source chaude, qui est un circuit d'utilisation de la chaleur. Le circuit d'utilisation est par exemple un circuit d'eau sanitaire par exemple entrant à 60°C. Le frigorigène F2 voit sa température baissée et cède une partie de sa chaleur à l'eau sanitaire, qui ressort par exemple à 70°C. Le frigorigène F2 se condense et traverse ensuite le détendeur, sa pression est a température baisse. Le frigorigène F2 est renvoyé vers les composants 16 et 18 pour un nouveau cycle. Le frigorigène F1 retourne dans le générateur 13 pour un nouveau cycle.

L'absorbeur 6 et le condenseur 8 de la machine à absorption forment la source froide de la pompe à chaleur.

Grâce à l'invention, la pompe à chaleur relève la température de l'absorbeur 6 et du condenseur 8 de la machine à absorption pour produire à son condenseur 20 un fluide chauffé par exemple à 70°C.

Les performances du système thermique de la figure 1 peuvent être calculées comme suit :

Le coefficient de performance global s'écrit :

$$\text{COP}_{tot} = \frac{(Q2+Q3)}{(Q1+Wc+Wp)} \sim \frac{(Q2+Q3)}{(Q1+Wc)} \text{ en négligeant le travail de la pompe de solution}$$

Avec :

Q1 = Energie au générateur.
Q2 = Energie à l'évaporateur de la machine absorption.
Q3 = Energie au condenseur de la pompe à chaleur.
Wc = Travail du compresseur.
Wp = Travail de la pompe.

Si le coefficient de performance thermique de la machine à absorption est pris égal à 0,7, alors Q2 = 0,7 x Q1.

Au condenseur et à l'absorbeur de la machine à absorption, la chaleur échangée sera :

$$Q1 + Q2 = 1,7 \times Q1$$

Pour la pompe à chaleur, le coefficient d'efficacité frigorifique ou $EER_{PAC}$ ou Energy Efficiency Ratio de la pompe à chaleur est pris égal à 4, alors :

$$Wc = \frac{(Q1 + Q2)}{EER_{PAC}} = \frac{1,7 \times Q1}{4} = 0,425 \times Q1$$

Au condenseur, nous obtenons :

$$Q3 = (EER + 1) \times Wc = 5 \times 0,425 \times Q1 = 2,125 \times Q1$$

Nous obtenons ainsi :

$$\text{COP}_{tot} = \frac{(Q2 + Q3)}{(Q1 + Wc)} = \frac{(0,7 \times Q1 + 2,125 \times Q1)}{(Q1 + 0,425x Q1)} = 2$$

Avec :

$$\text{COP}_{Froid} = \frac{Q2}{(Q1 + Wc)} = \frac{0,7}{1.425} = 0.5$$

$$\text{COP}_{Chaud} = \frac{Q3}{(Q1 + Wc)} = \frac{2.125}{1.425} = 1.5$$

En considérant la consommation énergétique d'une thermofrigopompe et d'une pompe à chaleur, le gain économique obtenu grâce à l'invention est estimé entre 4.7% et 7.1% respectivement pour un réseau de chaleur et de froid urbain.

Sur la figure 3, on peut voir une variante de réalisation S2 du système thermique de la figure 1, dans laquelle les composants 16 et 18 de la pompe à chaleur sont connectés en série et non plus en parallèle avec le compresseur 22 et le condenseur 20. Cette connexion en série simplifie la circulation du frigorigène F2. Le fonctionnement du système S2 est similaire à celui du système S1.

Le système selon l'invention présente l'avantage de pouvoir présenter un grand nombre de modes de fonctionnement permettant de le rendre utilisable en toute saison et de s'adapter aux besoins. Il présente une grande versatilité. Pour cela on peut prévoir que le système thermique comprenne des jeux de vannes (non représentés) sur les circuits de pompe à chaleur et de machine à absorption pour reconfigurer le système. De préférence il s'agit d'électrovannes pouvant être commandées par une unité de commande UC informatisée, qui peut par exemple gérer de manière autonome les changements de mode de fonctionnement en fonction d'un réglage préétabli et/ou des conditions de température extérieure et/ou température intérieure.

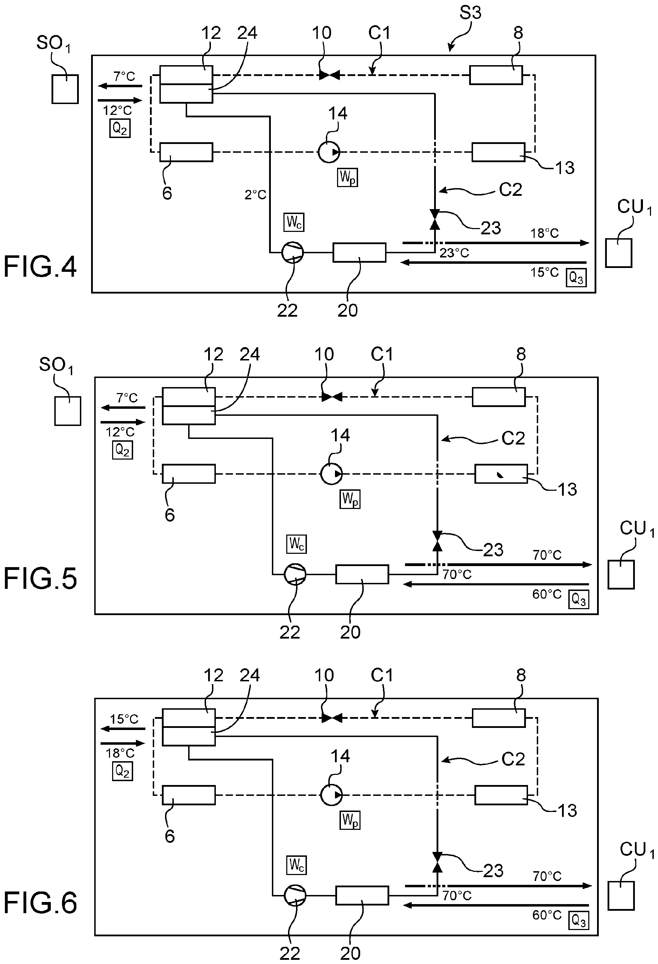

Sur la figure 4, on peut voir un exemple d'un tel système thermique S3, dans lequel la pompe à chaleur comporte en plus des composants 16 et 18, un composant supplémentaire 24 ayant également une fonction d'évaporateur.

Le composant 24 est monté sur une branche du circuit de la pompe à chaleur de sorte à pouvoir être connecté en série avec le compresseur et le condenseur, et à pouvoir isoler les composants 16 et 18. Le circuit de la pompe à chaleur comporte des vannes pour connecter en série le composant 24, le compresseur et le condenseur et court-circuiter les composants 16 et 18. Dans cette configuration, la machine à absorption ne fonctionne pas.

Le composant 24 est connecté à la source 501. Il est par exemple juxtaposé à l'évaporateur de la machine à absorption. Le composant 24 permet à la pompe à chaleur de fonctionner comme une pompe à chaleur classique pour produire du froid à la source 501, le composant 24 fonctionnant comme un évaporateur et captant la chaleur de la source 501. La source SO1 est par exemple un circuit de climatisation.

L'évaporateur 12 de la machine à absorption et le composant 24 ne fonctionnent pas en même temps. Il n'y a pas d'échange thermique entre eux.

Le fonctionnement du système S3 ne sera pas décrit en détail puisqu'il s'agit du fonctionnement classique d'une pompe à chaleur qui produit du froid uniquement. A titre d'exemple, au niveau de la source SO1 le fluide entrant est à 12°C et le fluide sortant est à 7°C, le condenseur génère une chaleur à 23°C, le fluide entrant est à 15° C et le fluide sortant est à 18°C. Ce mode de fonctionnement est désigné mode 3. Dans ce mode de fonctionnement, le circuit d'utilisation est en fait une source de chaleur.

Sur la figure 5, le système S3 fonctionne en pompe à chaleur seul, mais il produit à la fois du froid à 7°C au niveau du composant 24, et de l'eau chaude sanitaire au niveau du condenseur, qui est connecté à une source S3 fournissant un fluide à 60°C. Une eau chaude à 70°C est produite. Ce mode de fonctionnement est désigné mode 5.

Sur la figure 6, le système produit au condenseur par exemple une eau chaude sanitaire et/ ou pour le chauffage à partir d'une source SO1 aérothermique ou géothermique. Le composant 24 de la pompe à chaleur est connecté à une source 501, dont le fluide entrant est à 18°C et le fluide sortant est à 15°C. Ce mode de fonctionnement est désigné mode 6.

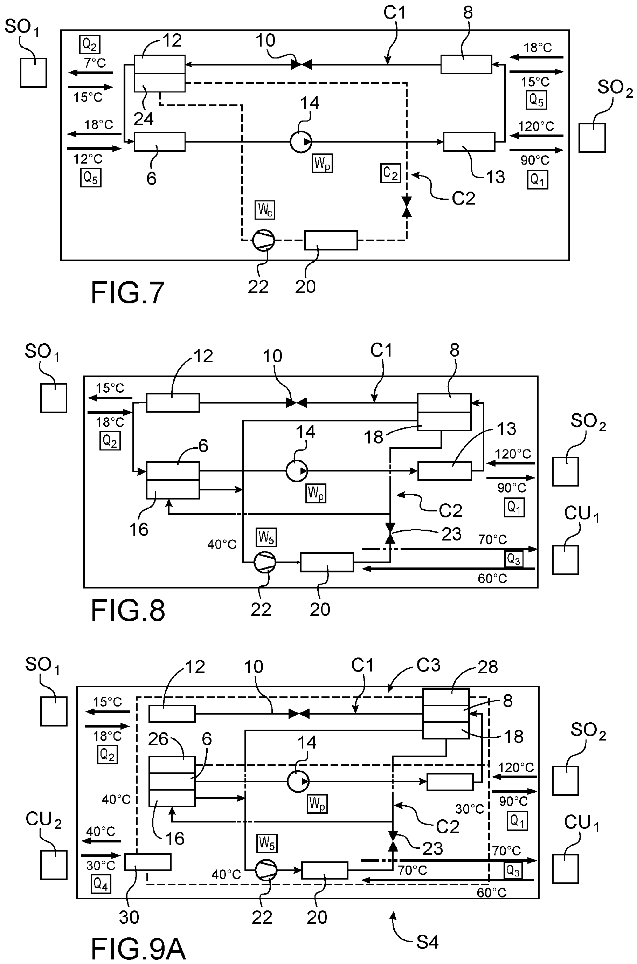

Sur la figure 7, on peut voir le système 53 de la figure 4 fonctionnant en machine à absorption seule. La pompe à chaleur ne fonctionne pas. La machine à absorption produit du froid à la source SO1 à partir de la chaleur fournir à la source SO2. Ce mode de fonctionnement est désigné mode 4.

Le fonctionnement en machine à absorption seule est également applicable pour les systèmes S1 et S2.

Sur la figure 8, on peut voir le système thermique de la figure 1 dans un autre mode de fonctionnement. Dans ce mode, le système est configuré pour produire seul un fluide chaud, par exemple de l'eau chaude sanitaire, à une température de l'ordre de 70°C. La source SO1 est une permettant de source géothermique ou une source aérothermique, par exemple à une température entre 12°C et 18°C.

Le fonctionnement de ce système est similaire à celui du système de la figure 1, mais le fluide entrant dans l'évaporateur entre à 18°C et ressort à 15°C. Cette configuration est utilisée lorsqu'il n'y a pas de besoin en climatisation. Ce mode de fonctionnement est désigné mode 1b.

Sur la figure 9A, on peut voir un autre exemple de réalisation d'un système thermique S4 selon l'invention comportant en plus des circuits C1 et C2 un troisième circuit C3 permettant une récupération de chaleur supplémentaire. Le circuit C3 est distinct des circuits C1 et C2. Un fluide F3 circule dans le circuit C3.

Dans cet exemple, le circuit C3 comporte un composant 26 en échange thermique avec le condenseur de la machine à absorption et le composant 18, et un composant 28 en échange thermique avec l'absorbeur de la machine à absorption et le composant 16 de la pompe à chaleur.

De manière préférée, le composant 26, le condenseur 8 et le composant 18 sont intégrés et forment un échangeur trois flux et/ou le composant 28, l'absorbeur 6 et le composant 16 sont intégrés et forment un échangeur trois flux.

La quantité de chaleur collectée par le composant 26 et par le composant 28 est désignée Q5.

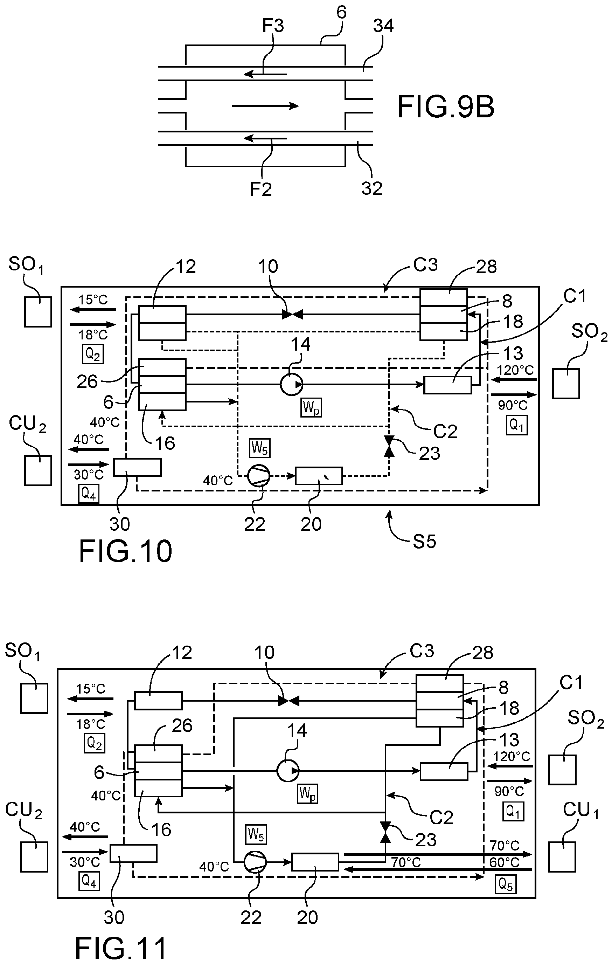

Sur la figure 9B, on peut voir un exemple de réalisation d'un échangeur trois flux. Deux tubes 32, 34 traversent une cuve formant le condenseur 8 ou l'absorbeur 6.

Les flèches symbolisent l'écoulement des fluides F1, F2, F3 mais le sens d'écoulement n'est en aucun cas limitatif. En outre il sera compris que de préférence, les tubes 32 et 34 sont tels qu'ils augmentent la surface d'échange, par exemple ils présentent une forme en serpentin.

En outre, le circuit C3 comporte un échangeur thermique 30 assurant le transfert de la chaleur collecté par les composants 26 et 28 à un circuit de chauffage par exemple. Le circuit C3 comporte également une pompe (non représentée) assurant la circulation du fluide

La quantité de chaleur échangée au niveau de l'échangeur 30 est désignée Q4.

Dans cet exemple, les composants 26 et 28 sont connectés en parallèle avec l'échangeur 30.

Le débit du circuit C3 peut être avantageusement régulé en fonction des températures des échangeurs au niveau des ensembles échangeurs de l'absorbeur et condenseur de la machine absorption, afin que la collecte de la chaleur par le circuit C3 ne perturbe pas ou peu le fonctionnement de la pompe à chaleur

Le fonctionnement de ce système est similaire à celui du système S1. Dans cet exemple l'évaporateur de la machine à absorption est connecté à une source SO1 aérothermique ou géothermique et il produit de l'eau chaude sanitaire et/ou de l'eau pour le chauffage à 70°C. Le mode de fonctionnement de ce système est désigné mode 2.

Sur la figure 10, on peut voir un système thermique S5 configuré pour fonctionner en machine à absorption seule, la pompe à chaleur est arrêtée, ou en pompe à chaleur seule, la machine à absorption étant arrêtée. Lorsque seule la machine à absorption fonctionne, elle produit du froid au niveau de l'évaporateur 12 et le circuit C3 prélève la chaleur à l'absorbeur 6 et au condenseur 8 et échange de la chaleur avec un circuit extérieur au niveau de l'échangeur 30, ou est connecté directement à un circuit utilisant la chaleur extraite. Dans cet exemple, le circuit C2 comporte un composant 24 capable d'être connecté à la source SO1 pour fonctionner en évaporateur.

Le mode de fonctionnement de ce système est désigné mode 7.

Sur la figure 11, on peut voir une variante de réalisation des systèmes de la figure 9A, dans laquelle les composants 26 et 28 sont connectés en série avec l'échangeur 30 simplifiant la circulation du fluide.

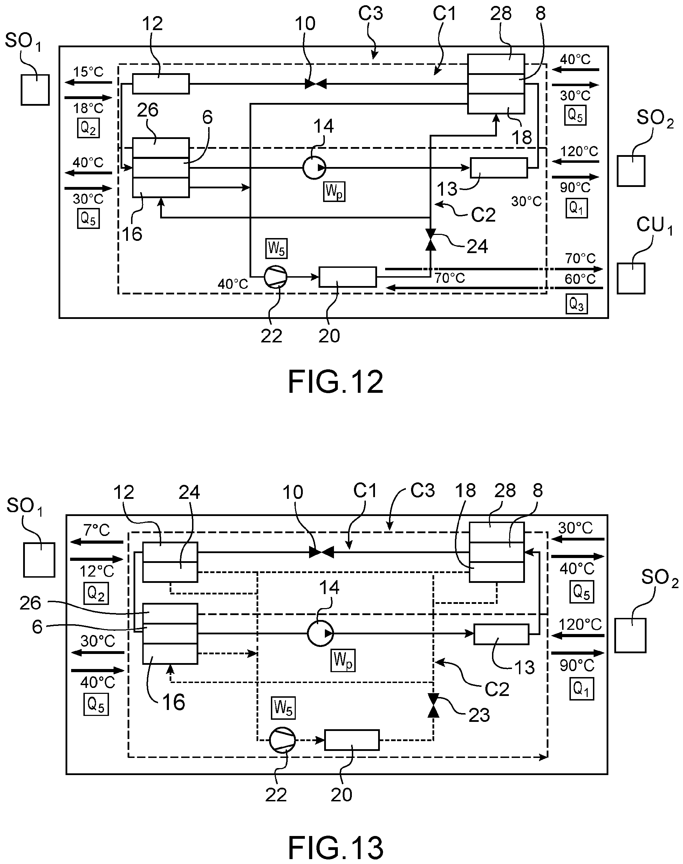

Sur la figure 12, on peut voir une variante du système de la figure 9A, dans laquelle le circuit C3 ne comporte pas d'échangeur 30 et est connecté directement au circuit de chauffage. La circulation du fluide est simplifiée, le nombre de composants et réduit et les performances sont améliorées.

Il sera compris que cette connexion directe s'applique également au système de la figure 11.

Sur la figure 13, on peut voir représenté le système de la figure 10 en mode de fonctionnement machine à absorption seule. Le système produit par exemple du chauffage qui est extrait par le circuit C3 qui forme directement un circuit de chauffage.

Sur la figure 14 on peut voir un système thermique S6 selon un deuxième mode de réalisation, dans lequel la pompe à chaleur est couplée à la machine à absorption par l'intermédiaire du circuit C3. La pompe à chaleur comporte un composant 36 ayant une fonction d'évaporateur couplé à un échangeur thermique 38 du circuit C3 connecté en parallèle à l'échangeur 30. La pompe à chaleur relève la température de la chaleur collectée par le circuit C3 par ses composants 26 et 28 sur le circuit de la machine à absorption.

Le composant 26 et l'absorbeur 6 sont avantageusement intégrés formant un échangeur deux flux. Le composant 28 et le condenseur 8 sont avantageusement intégrés formant un échangeur deux flux.

La source S01 est une source aérothermique ou géothermique par exemple à 15°C, la source SO2 est par exemple à 120°C, la pompe à chaleur produit par exemple de l'eau chaude sanitaire à 70°C et le circuit C3 délivre une chaleur à 40°C via l'échangeur 30.

Sur la figure 15, on peut voir une variante du système de la figure 14, dans laquelle le composant 36 de la pompe à chaleur est couplé à l'échangeur thermique 30 qui est en échange thermique avec un circuit extérieur. Le circuit C3 est alors simplifié. Dans cet exemple, la source SO1 est une source aérothermique ou géothermique par exemple à 15°C, la source SO2 est par exemple à 120°C, la pompe à chaleur produit par exemple de l'eau chaude sanitaire à 70°C et le circuit C3 délivre une chaleur à 40°C via l'échangeur 30

Il sera compris que la configuration dans laquelle les composants 26 et 28 sont connectés en série s'applique aux différents exemples mettant en oeuvre ses composants.

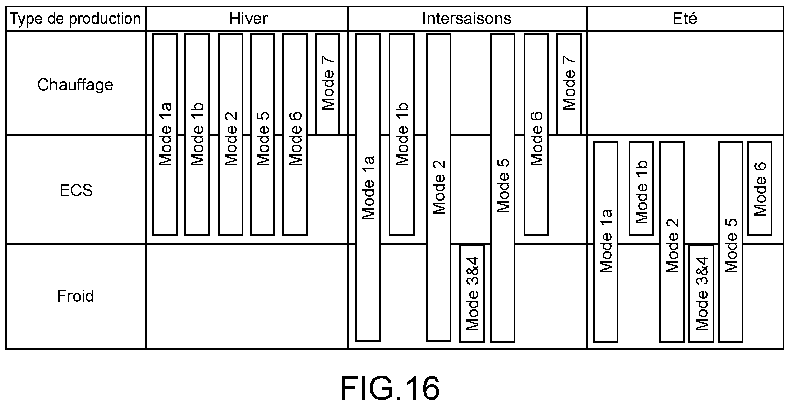

Sur la figure 16, on peut des exemples des périodes d'utilisation des différentes modes de fonctionnement au cours des différentes saisons et en fonction des besoins. L'intersaison comprend le printemps et l'automne. ECS désigne l'eau chaude sanitaire. Certains modes permettent à la fois de produire du froid, du chauffage et de l'eau chaude sanitaire. Il sera compris que le système fonctionne selon un seul mode de fonctionnement à la fois.

Grâce à l'invention, le système thermique permet une utilisation tout au long de l'année et de satisfaire les besoins en chauffage, d'eau chaude sanitaire et de froid.

Comme expliqué ci-dessus, le passage d'une configuration à une autre configuration est avantageusement commandé par une unité de commande dans laquelle les dates et/ou heures de changement de configuration sont préprogrammées, ces dates et/ou heures dépendant notamment du lieu d'implantation du système.

Le système thermique offre un couplage très performant notamment entre la machine à absorption et la pompe à chaleur, tout en permettant un fonctionnement séparé de celles-ci et offre donc une grande adaptabilité.

Le système thermique selon l'invention est particulièrement adapté à une application à un logement, par exemple une maison individuelle, un immeuble ou ensemble de logements.

**Revendications**

1. Système thermique comportant un premier circuit de machine à absorption et au moins un deuxième circuit, ledit premier circuit de machine à absorption comportant un évaporateur (12) configuré pour être connecté à une première source de chaleur (SO1), un générateur (13) configuré pour être connecté à une deuxième source de chaleur (SO2), un condenseur (8), un absorbeur (6), un détendeur et une pompe, le deuxième circuit comportant un premier composant (18, 28) pour collecter au moins une partie de la chaleur au condenseur (8) et un deuxième composant (16, 26) pour collecter au moins une partie de la chaleur à l'absorbeur (6) et apte à transférer cette chaleur à un premier circuit d'utilisation (CU1), **caractérisé en ce que** le deuxième circuit est un circuit de pompe à chaleur comprenant un condenseur (20) destiné à être connecté au premier circuit d'utilisation (CU1) de la chaleur produite par la pompe à chaleur, une pompe, un détendeur, et **en ce que** le premier composant (18) et le deuxième composant (16) forment des évaporateurs de la pompe à chaleur.

2. Système thermique selon la revendication 1, comportant un premier échangeur au moins à deux flux comprenant l'absorbeur et le premier composant, et un deuxième échangeur au moins à deux flux comprenant le condenseur et le deuxième composant.

3. Système thermique selon la revendication 1 ou 2, dans lequel le circuit de pompe à chaleur comporte un troisième composant (24) formant évaporateur destiné à être connecté à la première source de chaleur (SO1), lorsque le circuit machine à absorption ne fonctionne pas et les premier (18) et deuxième (16) composants sont court-circuités et des moyens pour isoler les premier (18) et deuxième (16) composants du condenseur (20) ou le troisième composant (24) du condenseur (20).

4. Système thermique selon l'une des revendications 1 à 3, comportant un troisième circuit comportant un quatrième composant (28) pour collecter au moins une partie de la chaleur au niveau du condenseur (8) et un cinquième composant (26) pour collecter au moins une partie de la chaleur à l'absorbeur (6) et apte à transférer cette chaleur à un deuxième circuit d'utilisation (CU2).

5. Système thermique selon la revendication précédente, dans lequel le quatrième (28) et le cinquième (26) composants sont des échangeurs thermiques.

6. Système thermique selon la revendication précédente en combinaison avec la revendication 2, dans lequel le premier échangeur est un échangeur à trois flux comprenant le condenseur (8), le premier composant (18) et le quatrième composant (28), et le deuxième échangeur est un échangeur à trois flux comprenant l'absorbeur (6), le deuxième composant (16) et le cinquième composant (26).

7. Système thermique selon la revendication 4, 5 ou 6, dans lequel le troisième circuit comporte un échangeur thermique (30) connecté au deuxième circuit d'utilisation (CU2) ou le troisième circuit forme directement le deuxième circuit d'utilisation (CU2).

8. Système thermique selon l'une des revendications précédentes en combinaison avec la revendication 2, dans lequel la première source (SO1) est une source aérothermique ou géothermique, la deuxième source (SO2) est un réseau de chaleur urbain, une source de chaleur d'origine solaire ou une énergie fatale et le premier circuit d'utilisation (CU1) est du chauffage et/ou de l'eau chaude sanitaire.

9. Système thermique selon l'une des revendications 1 à 7 en combinaison avec la revendication 2, dans lequel la première source (SO1) produit du froid, la deuxième source (SO2) est un réseau de chaleur urbain, une source de chaleur d'origine solaire ou une énergie fatale et le premier circuit d'utilisation (CU1) est un circuit de chauffage et/ou de production d'eau chaude sanitaire.

10. Système thermique selon l'une des revendications 1 à 7 en combinaison avec les revendications 2 et 7, dans lequel la première source (SO1) est une source aérothermique ou géothermique ou qui produit du froid, la deuxième source (SO2) est un réseau de chaleur urbain, une source de chaleur d'origine solaire ou une énergie fatale, le premier circuit d'utilisation (CU1) est un circuit de chauffage et/ou de production d'eau chaude sanitaire et le deuxième circuit d'utilisation est un circuit de chauffage.

11. Système thermique selon l'une des revendications précédentes comportant une unité de commande (UC) configurée pour activer les différents circuits simultanément ou séparément selon des modes programmées.

**Patentansprüche**

1. Thermisches System, das einen ersten Absorptionsmaschinenkreislauf und mindestens einen zweiten Kreislauf umfasst, wobei der erste Absorptionsmaschinenkreislauf einen Verdampfer (12), der mit einer ersten Wärmequelle (SO1) verbunden ist, einen Generator (13), der dazu konfiguriert ist, mit einer zweiten Wärmequelle (SO2) verbunden zu werden, einen Kondensator (8), einen Absorber (6), ein Druckminderungsventil und eine Pumpe umfasst, wobei der zweite Kreislauf eine erste Komponente (18, 28) zum Sammeln von mindestens einem Teil der Wärme am Kondensator (8) und eine zweite Komponente (16, 26) zum Sammeln von mindestens einen Teil der Wärme am Absorber (6) umfasst und dazu geeignet ist, diese Wärme an einen ersten Nutzungskreislauf (CU1) zu übertragen, **dadurch gekennzeichnet, dass** der zweite Kreislauf ein Wärmepumpenkreislauf ist, der einen Kondensator (20), der dazu bestimmt ist, mit dem ersten Nutzungskreislauf (CU1) der von der Wärmepumpe erzeugten Wärme verbunden zu werden, eine Pumpe und ein Druckminderungsventil umfasst, und dass die erste Komponente (18) und die zweite Komponente (16) Verdampfer der Wärmepumpe bilden.

2. Thermisches System nach Anspruch 1, das einen ersten Wärmetauscher mit mindestens zwei Strömen, der den Absorber und die erste Komponente umfasst, und einem zweiten Wärmetauscher mit mindestens zwei Strömen umfasst, der den Kondensator und die zweite Komponente umfasst.

3. Thermisches System nach Anspruch 1 oder 2, wobei der Wärmepumpenkreislauf eine dritte Komponente (24), die einen Verdampfer bildet, der dazu bestimmt ist, mit der ersten Wärmequelle (SO1) verbunden zu werden, wenn der Absorptionsmaschinenkreislauf nicht in Betrieb ist und die erste (18) und zweite (16) Komponente kurzgeschlossen sind, und Mittel zum Isolieren der ersten (18) und der zweiten (16) Komponente vom Kondensator (20) oder der dritten Komponente (24) vom Kondensator (20) umfasst.

4. Thermisches System nach einem der Ansprüche 1 bis 3, das einen dritten Kreislauf umfasst, der eine vierte Komponente (28) zum Sammeln von mindestens einem Teil der Wärme am Kondensator (8) und eine fünfte Komponente (26) zum Sammeln von mindestens einem Teil der Wärme am Absorber (6) umfasst und dazu geeignet ist, diese Wärme an einen zweiten Nutzungskreislauf (CU2) zu übertragen.

5. Thermisches System nach dem vorhergehenden Anspruch, wobei die vierte (28) und die fünfte (26) Komponente Wärmetauscher sind.

6. Thermisches System nach dem vorhergehenden Anspruch in Kombination mit Anspruch 2, wobei der erste Wärmetauscher ein Wärmetauscher mit drei Strömen ist, der den Kondensator (8), die erste Komponente (18) und die vierte Komponente (28) umfasst, und der zweite Wärmetauscher ein Wärmetauscher mit drei Strömen ist, der den Absorber (6), die zweite Komponente (16) und die fünfte Komponente (26) umfasst.

7. Thermisches System nach Anspruch 4, 5 oder 6, wobei der dritte Kreislauf einen Wärmetauscher (30) umfasst, der mit dem zweiten Nutzungskreislauf (CU2) verbunden ist, oder der dritte Kreislauf direkt den zweiten Nutzungskreislauf (CU2) bildet.

8. Thermisches System nach einem der vorhergehenden Ansprüche in Kombination mit Anspruch 2, wobei die erste Quelle (SO1) eine aerothermische oder geothermische Quelle ist, die zweite Quelle (SO2) ein Fernwärmenetz, eine Solarwärmequelle oder Abwärme ist und der erste Nutzungskreislauf (CU1) eine Heizungsanlage und/oder Warmwasser ist.

9. Thermisches System nach einem der Ansprüche 1 bis 7 in Kombination mit Anspruch 2, wobei die erste Quelle (SO1) Kälte erzeugt, die zweite Quelle (SO2) ein Fernwärmenetz, eine Solarwärmequelle oder Abwärme ist und der erste Nutzungskreislauf (CU1) ein Heizkreislauf und/oder eine Warmwasserbereitung ist.

10. Thermisches System nach einem der Ansprüche 1 bis 7 in Kombination mit den Ansprüchen 2 und 7, wobei die erste Quelle (SO1) eine aerothermische oder geothermische Quelle ist oder Kälte erzeugt, die zweite Quelle (SO2) ein Fernwärmenetz, eine Solarwärmequelle oder Abwärme ist, der erste Nutzungskreislauf (CU1) ein Heizkreislauf und/oder eine Warmwasserbereitung ist und der zweite Nutzungskreislauf ein Heizkreislauf ist.

11. Thermisches System nach einem der vorhergehenden Ansprüche, das eine Steuereinheit (UC) umfasst, die dazu konfiguriert ist, die verschiedenen Kreisläufe gemäß programmierten Modi gleichzeitig oder getrennt zu aktivieren.

**Claims**

1.  A thermal system including a first absorption machine circuit and at least a second circuit, said first absorption machine circuit including an evaporator (12) connected to a first heat source (SO1), a generator (13) configured to be connected to a second heat source (SO2), a condenser (8), an absorber (6), an expansion valve and a pump, the second circuit including a first component (18, 28) for collecting at least part of the heat at the condenser (8) and a second component (16, 26) for collecting at least part of the heat at the absorber (6) and capable of transferring this heat to a first utilisation circuit (CU1), **characterised in that** the second circuit is a heat pump circuit comprising a condenser (20) intended to be connected to the first circuit (CU1) for utilising the heat produced by the heat pump, a pump, an expansion valve, and **in that** the first component (18) and the second component (16) form heat pump evaporators.

2.  The thermal system according to claim 1, including a first exchanger with at least two flows comprising the absorber and the first component, and a second exchanger with at least two flows comprising the condenser and the second component.

3.  The thermal system according to claim 1 or 2, wherein the heat pump circuit includes a third component (24) forming an evaporator intended to be connected to the first heat source (SO1), when the absorption machine circuit is not operating and the first (18) and second (16) components are short-circuited and means for isolating the first (18) and second (16) components from the condenser (20) or the third component (24) from the condenser (20).

4.  The thermal system according to one of claims 1 to 3, including a third circuit including a fourth component (28) for collecting at least part of the heat at the condenser (8) and a fifth component (26) for collecting at least part of the heat at the absorber (6) and capable of transferring this heat to a second utilisation circuit (CU2).

5.  The thermal system according to the preceding claim, wherein the fourth (28) and the fifth (26) components are heat exchangers.

6.  The thermal system according to the preceding claim as combined with claim 2, wherein the first exchanger is a three-flow exchanger comprising the condenser (8), the first component (18) and the fourth component (28), and the second exchanger is a three-flow exchanger comprising the absorber (6), the second component (16) and the fifth component (26).

7.  The thermal system according to claim 4, 5 or 6, wherein the third circuit includes a heat exchanger (30) connected to the second utilisation circuit (CU2) or the third circuit directly forms the second utilisation circuit (CU2).

8.  The thermal system according to one of the preceding claims as combined with claim 2, wherein the first source (SO1) is an aerothermal or geothermal source, the second source (SO2) is an urban heat network, a heat source of solar origin or a waste energy and the first utilisation circuit (CU1) is a heating and/or domestic hot water circuit.

9.  The thermal system according to one of claims 1 to 7 as combined with claim 2, wherein the first source (SO1) produces cold, the second source (SO2) is an urban heat network, a heat source of solar origin or a waste energy and the first utilisation circuit (CU1) is a heating and/or domestic hot water production circuit.

10. The thermal system according to one of claims 1 to 7 as combined with claims 2 and 7, wherein the first source (SO1) is an aerothermal or geothermal source or which produces cold, the second source (SO2) is an urban heat network, a heat source of solar origin or a waste energy, the first utilisation circuit (CU1) is a heating and/or domestic hot water production circuit and the second utilisation circuit is a heating circuit.

11. The thermal system according to one of the preceding claims including a control unit (UC) configured to activate the different circuits simultaneously or separately according to programmed modes.

FIG.1

FIG.2

FIG.3

FIG.4

FIG.5

FIG.6

FIG.7

FIG.8

FIG.9A

FIG.9B

FIG.10

FIG.11

FIG.12

FIG.13

FIG.14

FIG.15

FIG.16

## RÉFÉRENCES CITÉES DANS LA DESCRIPTION

**Documents brevets cités dans la description**

- US 20150013373 A